# EUROPEAN PATENT APPLICATION

(11) **EP 4 614 079 A1**
(43) Date of publication of application: **10.09.2025**
(21) Application number: 23887497.8
(22) Date of filing: 30.06.2023
(51) Int. Cl.: F24F 1/32, F24F 1/56, F24F 13/20, F24F 1/02, F24F 1/04, F24F 1/06

(54) **AIR CONDITIONER**

(30) Priority: 08.11.2022 CN 202222971575 U
(71) Applicant: Airmate Electric (Jiujiang) Co., Ltd., Jiujiang, Jiangxi 332100 (CN)
(72) Inventor: TSAI, Zhengfu, Jiujiang, Jiangxi 332100 (CN); DENG, Shiqiang, Jiujiang, Jiangxi 332100 (CN)
(74) Representative: Bayramoglu et al.
(86) International application number: PCT/CN2023/104643
(87) International publication number: WO 2024/098801

(57) **Abstract**

Disclosed is an air conditioner. The air conditioner includes an outdoor unit casing, an indoor unit casing, a condenser, an evaporator and a telescopic pipe assembly; where the outdoor unit casing is detachably connected with the indoor unit casing; the condenser is disposed inside the outdoor unit casing; the evaporator is disposed inside the indoor unit casing; and two ends of the telescopic pipe assembly are connected with the outdoor unit casing and the indoor unit casing respectively, and the telescopic pipe assembly is communicated with the condenser and the evaporator separately.

## Description

### TECHNICAL FIELD

The present disclosure relates to the technical field of household appliances, in particular, to an air conditioner.

### BACKGROUND

An outdoor unit of a household air conditioner is fixedly installed outdoors, while an indoor unit thereof is fixedly installed indoors. Therefore, the household air conditioner can only be used for refrigeration or heating indoors and cannot be easily moved, which limits its usage scenarios. For example, during summertime, users often enjoy setting up tents outdoors to experience life in the open air. However, since the air conditioner cannot be moved into the tent, they can only rely on a fan for cooling inside the tent. As a result, users may still feel uncomfortably hot, making the experience less than ideal.

### SUMMARY

An embodiment of the present disclosure provides an air conditioner including an outdoor unit casing, an indoor unit casing, a condenser, an evaporator, and a telescopic pipe assembly; where the outdoor unit casing is detachably connected with the indoor unit casing; the condenser is disposed inside the outdoor unit casing; the evaporator is disposed inside the indoor unit casing; and two ends of the telescopic pipe assembly are connected with the outdoor unit casing and the indoor unit casing respectively, and the telescopic pipe assembly is communicated with the condenser and the evaporator separately.

In a preferred implementation of the present disclosure, a plurality of connecting buckles are disposed on a side of the outdoor unit casing facing towards the indoor unit casing; a plurality of connecting slots are disposed on a side of the indoor unit casing facing towards the outdoor unit casing, and the connecting buckles are matched with the connecting slots; and a pressing piece is disposed on a position on the indoor unit casing, close to the connecting slots.

In a preferred implementation of the present disclosure, a plurality of positioning pins are further disposed on a side of the outdoor unit casing facing towards the indoor unit casing; and positioning slots matched with the positioning pins are further disposed on a side of the indoor unit casing facing towards the outdoor unit casing.

In a preferred implementation of the present disclosure, the outdoor unit casing is provided with two of the connecting buckles symmetrically disposed about a central axis of the outdoor unit casing and two of the positioning pins symmetrically disposed about the central axis of the outdoor unit casing, and the two of the positioning pins are disposed on inner sides of the two of the connecting buckles; and correspondingly, the indoor unit casing is provided with two of the connecting slots symmetrically disposed about a central axis of the indoor unit casing and two of the positioning slots symmetrically disposed about the central axis of the indoor unit casing, and the two of the positioning slots are disposed on inner sides of the two of the connecting slots.

In a preferred implementation of the present disclosure, a first side enclosure plate protrudes from a side of the outdoor unit casing facing towards the indoor unit casing, and the connecting buckles are disposed on the first side enclosure plate; and a second side enclosure plate protrudes from a side of the indoor unit casing facing towards the outdoor unit casing, and a space for accommodating the telescopic pipe assembly is defined between the second side enclosure plate and the first side enclosure plate.

In a preferred implementation of the present disclosure, the air conditioner further includes a compressor disposed in the indoor unit casing; the telescopic pipe assembly includes a first conveying pipe and a second conveying pipe; the evaporator is communicated with the compressor; two ends of the first conveying pipe are communicated with the compressor and the condenser respectively; and two ends of the second conveying pipe are communicated with the condenser and the evaporator respectively.

In a preferred implementation of the present disclosure, the first conveying pipe and/or the second conveying pipe are/is a rubber hose, a plastic hose, a metallic flexible hose or a silicone hose.

In a preferred implementation of the present disclosure, the evaporator is communicated with the second conveying pipe through a capillary pipe network.

In a preferred implementation of the present disclosure, the air conditioner further includes an outdoor unit fan and an indoor unit fan; where the outdoor unit fan is disposed in the outdoor unit casing; and the indoor unit fan is disposed in the indoor unit casing.

In a preferred implementation of the present disclosure, the outdoor unit casing is provided with a first air inlet and a first air outlet, and the first air outlet is located on a side of the outdoor unit casing facing away from the indoor unit casing; and the indoor unit casing is provided with a second air inlet and a second air outlet, and the second air outlet is disposed on a side of the indoor unit casing facing away from the outdoor unit casing.

An embodiment of the present disclosure provides an air conditioner. In the air conditioner, the outdoor unit casing and the indoor unit casing are detachably connected. That is to say, the outdoor unit casing and the indoor unit casing can be connected together to form an integrated air conditioner, or they can be separated into two components. Additionally, a refrigerant circulates between the condenser inside the outdoor unit casing and the evaporator inside the indoor unit casing through a telescopic pipe assembly, thereby enabling refrigeration or heating functions. Thus, both the outdoor unit (outdoor unit casing and condenser) and indoor unit (indoor unit casing and evaporator) of the air conditioner are movable. The distance between the outdoor unit and the indoor unit can be correspondingly adjusted based on usage scenarios. For example, by placing the indoor unit inside a tent while keeping the outdoor unit outside the tent, a user can enjoy cool air generated by the indoor unit inside the tent, without being affected by hot air generated by the outdoor unit, thereby experiencing a comfortable outdoor life in summertime.

### BRIEF DESCRIPTION OF THE DRAWINGS

To describe the technical solutions in the embodiments of the present disclosure or in the prior art more clearly, the following briefly introduces the accompanying drawings required for describing the embodiments or the prior art. Apparently, the accompanying drawings in the following description merely show some embodiments of the present disclosure, and a person of ordinary skill in the art may still derive other drawings from the accompanying drawings without creative efforts. In addition, in the drawings, the same parts are indicated by the same reference numerals, and the drawings are not drawn to scale.
FIG. 1 is a schematic structural diagram of an air conditioner according to the present disclosure.
FIG. 2 is a schematic structural diagram of the air condition shown in FIG. 1 from another perspective.
FIG. 3 is a sectional view of an internal structure of the air conditioner shown in FIG. 1.
FIG. 4 is an enlarged view of region A in FIG. 3.
FIG. 5 is a schematic diagram illustrating an outdoor unit casing and an indoor unit casing of the air conditioner shown in FIG. 1 when separated.
FIG. 6 is an exploded view illustrating a structure of the air conditioner shown in FIG. 5.
FIG. 7 is a schematic diagram illustrating a refrigerant flow pipe of the air conditioner shown in FIG. 1.

### Reference Numerals:

1. outdoor unit casing; 11. connecting buckle; 12. positioning pin; 13. first side enclosure plate; 14. first air inlet; 15. first air outlet; 2. indoor unit casing; 21. connecting slot; 22. pressing piece; 23. positioning slot; 24. second side enclosure plate; 25. second air inlet; 26. second air outlet; 3. condenser; 4. evaporator; 5. telescopic pipe assembly; 51. first conveying pipe; 52. second conveying pipe; 6. compressor; 7. capillary pipe network; 8. outdoor unit fan; 9. indoor unit fan; and 10. metallic pipe.

### DETAILED DESCRIPTION OF THE EMBODIMENTS

In order to make the purposes, technical solutions and advantages of the embodiments of the present disclosure clearer, the technical solutions in the embodiments of the present disclosure are described clearly and completely below in conjunction with accompanying drawings of the present disclosure. Apparently, the embodiments described are some but not all of the embodiments of the present disclosure. All other embodiments obtained by a person of ordinary skill in the art based on the embodiments of the present disclosure without creative efforts shall fall within the protection scope of the present disclosure.

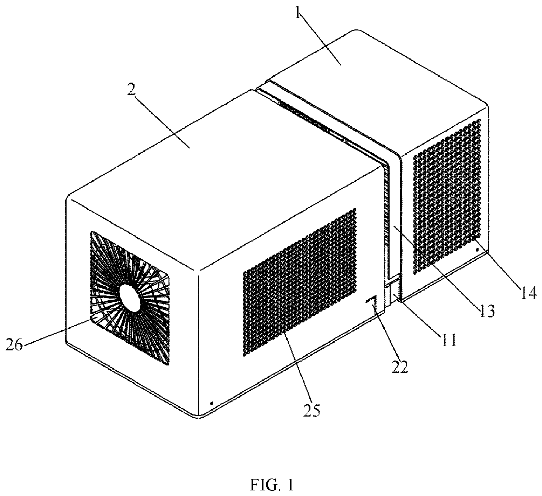

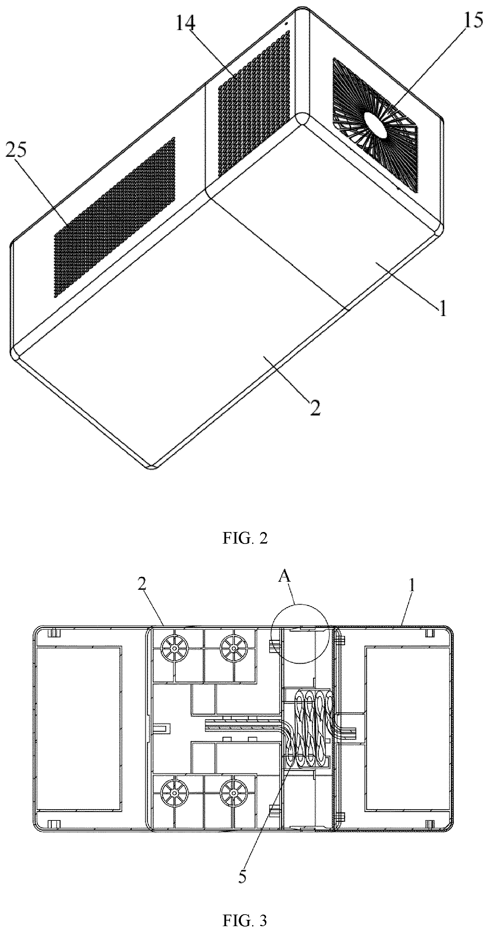

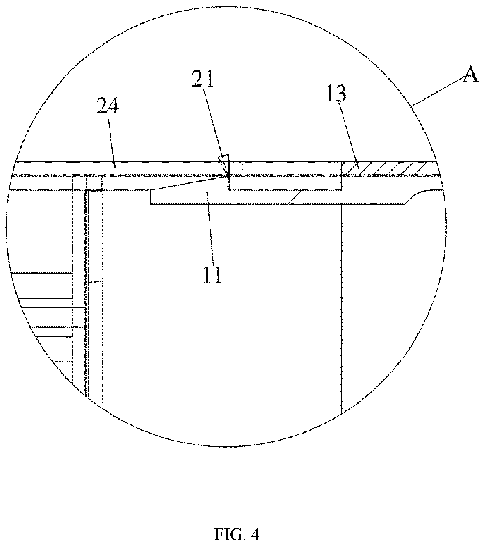

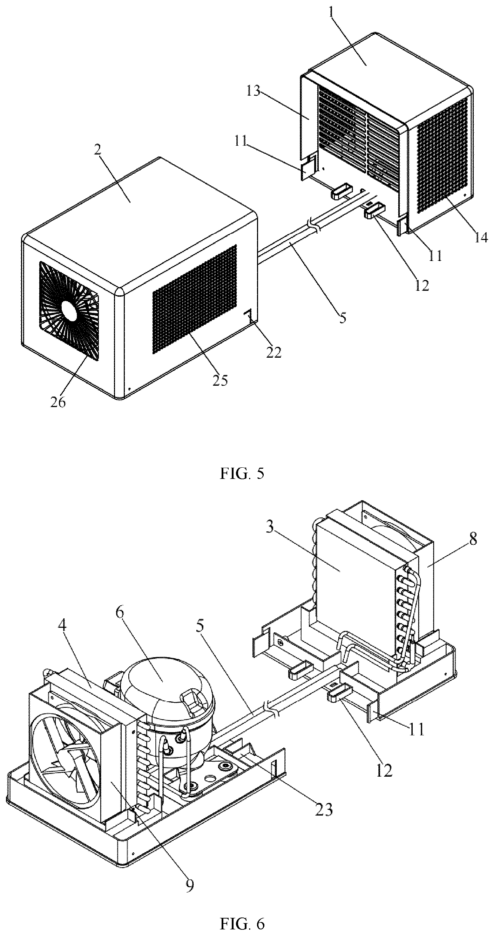

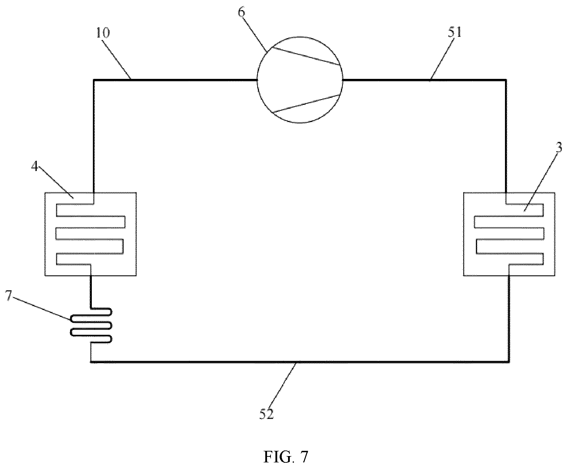

As shown in FIG. 1 to FIG. 7, an embodiment of the present disclosure provides an air conditioner including an outdoor unit casing 1, an indoor unit casing 2, a condenser 3, an evaporator 4, and a telescopic pipe assembly 5; where the outdoor unit casing 1 is detachably connected with the indoor unit casing 2; the condenser 3 is disposed inside the outdoor unit casing 1; the evaporator 4 is disposed inside the indoor unit casing 2; and two ends of the telescopic pipe assembly 5 are connected with the outdoor unit casing 1 and the indoor unit casing 2 respectively, and the telescopic pipe assembly 5 is communicated with the condenser 3 and the evaporator 4 separately.

According to the foregoing technical solution, the outdoor unit casing 1 and the indoor unit casing 2 are detachably connected. That is to say, the outdoor unit casing 1 and the indoor unit casing 2 can be connected together to form an integrated air conditioner, or the outdoor unit casing 1 and the indoor unit casing 2 can be separated into two components. Additionally, a refrigerant circulates between the condenser 3 inside the outdoor unit casing 1 and the evaporator 4 inside the indoor unit casing 2 through the telescopic pipe assembly 5, thereby enabling refrigeration or heating functions. Thus, both the outdoor unit (outdoor unit casing 1 and condenser 3) and indoor unit (indoor unit casing 2 and evaporator 4) of the air conditioner are movable. The distance between them can be flexibly adjusted based on usage scenarios. For example, by placing the indoor unit inside a tent while keeping the outdoor unit outside the tent, a user can enjoy cool air generated by the indoor unit inside the tent, without being affected by hot air generated by the outdoor unit, thereby experiencing a comfortable outdoor life in summertime.

According to one embodiment of the present disclosure, a plurality of connecting buckles 11 are disposed on a side of the outdoor unit casing 1 facing towards the indoor unit casing 2; a plurality of connecting slots 21 are disposed on a side of the indoor unit casing 2 facing towards the outdoor unit casing 1, and the connecting buckles 11 are matched with the connecting slots 21; and a pressing piece 22 is disposed on a position on the indoor unit casing 2, close to the connecting slots 21.

The connecting buckles 11 are engaged into the connecting slots 21, thereby connecting the outdoor unit casing 1 and indoor unit casing 2 into an integral whole; and by pressing the pressing piece 22, the connecting buckles 11 can be disengaged from the connecting slots 21, thereby achieving separation of the outdoor unit casing 1 and indoor unit casing 2.

A plurality of positioning pins 12 are further disposed on a side of the outdoor unit casing 1 facing towards the indoor unit casing 2; and positioning slots 23 matched with the positioning pins 12 are further disposed on a side of the indoor unit casing 2 facing towards the outdoor unit casing 1. By adoption of the positioning pins 12 and the positioning slots 23, the outdoor unit casing 1 and the indoor unit casing 2 are conveniently positioned, thereby facilitating subsequent connection.

To optimize the structures of the outdoor unit casing 1 and the indoor unit casing 2, in the present disclosure, the outdoor unit casing 1 is provided with two connecting buckles 11 symmetrically disposed about a central axis of the outdoor unit casing 1 and two positioning pins 12 symmetrically disposed about the central axis of the outdoor unit casing 1, and the two positioning pins 12 are located on inner sides of the two connecting buckles 11. Correspondingly, the indoor unit casing 2 is provided with two connecting slots 21 symmetrically disposed about a central axis of the indoor unit casing 2 and two positioning slots 23 symmetrically disposed about the central axis of the indoor unit casing 2, and the two positioning slots 23 are disposed on inner sides of the two connecting slots 21.

Herein, when the outdoor unit casing 1 and the indoor unit casing 2 according to the present disclosure are connected into an integral whole, the outdoor unit and the indoor unit are not likely to be separated from each other due to vibration during refrigeration or heating operation.

Further, a first side enclosure plate 13 protrudes from a side of the outdoor unit casing 1 facing towards the indoor unit casing 2, and the connecting buckles 11 are disposed on the first side enclosure plate 13; and a second side enclosure plate 24 protrudes from a side of the indoor unit casing 2 facing towards the outdoor unit casing 1, and a space for accommodating the telescopic pipe assembly 5 is defined between the second side enclosure plate 24 and the first side enclosure plate 13, so that the telescopic pipe assembly 5 can be stored between the first side enclosure plate 13 and the second side enclosure plate 24. Thus, when the outdoor unit casing 1 and the indoor unit casing 2 are connected and assembled into an integral whole, the appearance of the assembled air conditioner can be improved, and the packaging and transportation of the air conditioner are facilitated.

The air conditioner according to the present disclosure further includes a compressor 6 disposed in the indoor unit casing 2; the telescopic pipe assembly 5 includes a first conveying pipe 51 and a second conveying pipe 52; the evaporator 4 is communicated with the compressor 6, and a copper pipe or other metallic pipe 10 with good thermal conductivity may be communicated between the evaporator 4 and the compressor 6; two ends of the first conveying pipe 51 are communicated with the compressor 6 and the condenser 3 respectively; and two ends of the second conveying pipe 52 are communicated with the condenser 3 and the evaporator 4 respectively.

In a preferred implementation of the present disclosure, the first conveying pipe 51 and/or second conveying pipe 52 according to the present disclosure are/is a rubber hose, a plastic hose, a metallic flexible hose or a silicone hose.

The evaporator 4 is communicated with the second conveying pipe 52 through a capillary pipe network 7.

The compressor 6 of the air conditioner compresses the gaseous refrigerant into a high-temperature, high-pressure gaseous refrigerant and delivers the refrigerant to the condenser 3 for cooling. Then the condenser cools the refrigerant to a medium-temperature, high-pressure liquid refrigerant. Next, the capillary pipe network 7 conducts throttling and pressurization on said medium-temperature liquid refrigerant into a low-temperature, low-pressure gas-liquid mixture (predominantly liquid). After that, the evaporator 4 absorbs heat from the air, and the low-temperature, low-pressure gas-liquid mixture absorbs heat from the air through the evaporator 4, and is evaporated into gas. This causes temperature drop in the pipe of the evaporator 4. Air undergoes heat exchange when passing through the evaporator 4, so that the air is cooled, thereby achieving the refrigeration effect of the air conditioner. Afterward, the gaseous refrigerant returns to the compressor 6 to be compressed again, which continues the cycle of refrigeration. By reversing the flow direction of the refrigerant in the condenser 3 and the evaporator 4 relative to the refrigeration mode, heating can be achieved. Therefore, during heating, the outdoor unit blows cold air, while the indoor unit blows warm air.

The air conditioner according to the present disclosure further includes an outdoor unit fan 8 and an indoor unit fan 9; where the outdoor unit fan 8 is disposed in the outdoor unit casing 1; and the indoor unit fan 9 is disposed in the indoor unit casing 2. The outdoor unit casing 1 is provided with a first air inlet 14 and a first air outlet 15, and the first air outlet 15 is located on a side of the outdoor unit casing 1 facing away from the indoor unit casing 2; and the indoor unit casing 2 is provided with a second air inlet 25 and a second air outlet 26, and the second air outlet 26 is disposed on a side of the indoor unit casing 2 facing away from the outdoor unit casing 1.

The outdoor unit fan 8 can draw air into the outdoor unit casing 1 through the first air inlet 14 and discharge air outside the outdoor unit casing 1 through the first air outlet 15, thereby cooling the condenser 3 while carrying away heat from the condenser 3. The indoor unit fan 9 can draw air into the indoor unit casing 2 through the second air inlet 25 to allow the air to be cooled through the pipe of the evaporator 4; and afterward, the cooled air is discharged through the second air outlet 26. In this way, air conditioner refrigeration is achieved, thereby improving the ambient temperature.

It should be noted that reference throughout this specification to "one embodiment", "an embodiment", "an exemplary embodiment" or "some embodiments" means that the described embodiment may include a particular feature, structure, or characteristic, but not every embodiment necessarily include such particular feature, structure, or characteristic. Further, such a phrase may not necessarily refer to the same embodiment. In addition, when a particular feature, structure, or characteristic is described in connection with an embodiment, it is within the knowledge scope of those skilled in the art to implement such feature, structure, or characteristic in combination with other embodiments whether expressly described or not.

It should be easily understood that the terms "on...", "above...", and "over..." in the present disclosure should be interpreted in the broadest sense, such that "on..." not only means "directly on something", but also encompasses the meaning of "on something" with an intermediate feature or layer in between. Besides, "above..." or "over..." should not only encompass the meaning of "above something" or "over something", but also encompass the meaning of "above something" or "over something" with no intermediate feature or layer in between (i.e., directly on something).

In addition, for ease of description, spatial terms such as "under", "below", "lower", "above" and "upper" may be used herein to describe the relationship of one element or feature with respect to another element or feature as illustrated in the figure. The spatially relative terms are intended to encompass different orientations of the device in use or operation in addition to those shown the figure. The device may be otherwise oriented (rotated by 90 degrees or at other orientations), and the spatially relative terms used herein are interpreted accordingly.

It should be noted that relational terms herein such as "first" and "second" are merely used to distinguish one entity or operation from another entity or operation without necessarily requiring or implying any actual such relationship or order between such entities or operations. In addition, it should be noted that terms "comprise", "include" and any other variants thereof are intended to cover non-exclusive inclusion, so that a process, a method, an article or a device that includes a series of elements not only includes these very elements, but may further include other elements not expressly listed, or may further include elements inherent to this process, method, article or device. In case there are no more limitations, an element defined by the statement "include a..." does not exclude other same elements present in the process, the method, the article or the device that includes the element.

Finally, it should be noted that the foregoing embodiments are merely intended to explain the technical solutions of the present disclosure, rather than to limit the same. Although the present disclosure is described in detail with reference to the above embodiments, persons of ordinary skill in the art should understand that they may still make modifications to the technical solutions described in the above embodiments or make equivalent replacements on some or all technical features therein. The modifications or replacements do not make the essence of the corresponding technical solutions deviate from the scope of the technical solutions of the embodiments of the present disclosure.

## Claims

1. An air conditioner, comprising an outdoor unit casing, an indoor unit casing, a condenser, an evaporator and a telescopic pipe assembly, **characterized in that**
the outdoor unit casing is detachably connected with the indoor unit casing;
the condenser is disposed inside the outdoor unit casing;
the evaporator is disposed inside the indoor unit casing; and
two ends of the telescopic pipe assembly are connected with the outdoor unit casing and the indoor unit casing respectively, and the telescopic pipe assembly is communicated with the condenser and the evaporator separately.

2. The air conditioner according to claim 1, **characterized in that** a plurality of connecting buckles are disposed on a side of the outdoor unit casing facing towards the indoor unit casing;
a plurality of connecting slots are disposed on a side of the indoor unit casing facing towards the outdoor unit casing, and the connecting buckles are matched with the connecting slots; and
a pressing piece is disposed on a position on the indoor unit casing, close to the connecting slots.

3. The air conditioner according to claim 1 or 2, **characterized in that** a plurality of positioning pins are further disposed on a side of the outdoor unit casing facing towards the indoor unit casing; and
positioning slots matched with the positioning pins are further disposed on a side of the indoor unit casing facing towards the outdoor unit casing.

4. The air conditioner according to any one of claims 1 to 3, **characterized in that** the outdoor unit casing is provided with two of the connecting buckles symmetrically disposed about a central axis of the outdoor unit casing and two of the positioning pins symmetrically disposed about the central axis of the outdoor unit casing, and the two of the positioning pins are disposed on inner sides of the two of the connecting buckles; and
correspondingly, the indoor unit casing is provided with two of the connecting slots symmetrically disposed about a central axis of the indoor unit casing and two of the positioning slots symmetrically disposed about the central axis of the indoor unit casing, and the two of the positioning slots are disposed on inner sides of the two of the connecting slots.

5. The air conditioner according to any one of claims 1 to 4, **characterized in that** a first side enclosure plate protrudes from a side of the outdoor unit casing facing towards the indoor unit casing, and the connecting buckles are disposed on the first side enclosure plate; and
a second side enclosure plate protrudes from a side of the indoor unit casing facing towards the outdoor unit casing, and a space for accommodating the telescopic pipe assembly is defined between the second side enclosure plate and the first side enclosure plate.

6. The air conditioner according to claim 1, **characterized in that** the air conditioner further comprises a compressor disposed in the indoor unit casing;
the telescopic pipe assembly comprises a first conveying pipe and a second conveying pipe;
the evaporator is communicated with the compressor;
two ends of the first conveying pipe are communicated with the compressor and the condenser respectively; and
two ends of the second conveying pipe are communicated with the condenser and the evaporator respectively.

7. The air conditioner according to any one of claims 1 to 6, **characterized in that** the first conveying pipe and/or the second conveying pipe are/is a rubber hose, a plastic hose, a metallic flexible hose or a silicone hose.

8. The air conditioner according to any one of claims 1 to 6, **characterized in that** the evaporator is communicated with the second conveying pipe through a capillary pipe network.

9. The air conditioner according to claim 1, **characterized by** further comprising an outdoor unit fan and an indoor unit fan, wherein
the outdoor unit fan is disposed in the outdoor unit casing; and
the indoor unit fan is disposed in the indoor unit casing.

10. The air conditioner according to any one of claims 1 to 9, **characterized in that** the outdoor unit casing is provided with a first air inlet and a first air outlet, and the first air outlet is located on a side of the outdoor unit casing facing away from the indoor unit casing; and
the indoor unit casing is provided with a second air inlet and a second air outlet, and the second air outlet is disposed on a side of the indoor unit casing facing away from the outdoor unit casing.
